# EUROPEAN PATENT APPLICATION

(11) **EP 4 625 273 A1**
(43) Date of publication of application: **01.10.2025**
(21) Application number: 25163470.5
(22) Date of filing: 13.03.2025
(51) Int. Cl.: G06N 20/00, H04M 1/72406, G06F 8/65, G06N 3/08

(54) **AI TERMINAL FOR PROVIDING AI FEATURES AND ELECTRONIC DEVICE**

(30) Priority: 29.03.2024 KR 20240043197; 13.06.2024 KR 20240077057
(71) Applicant: LX Semicon Co., Ltd., Daejeon 34027 (KR)
(72) Inventor: LEE, Yun Tae, 34027 Daejeon (KR)
(74) Representative: Goddar, Heinz J.

(57) **Abstract**

An artificial intelligence (AI) terminal that is capable of being provided AI features to a connected electronic device by AI processing of the AI terminal and a method of providing AI features thereof are provided. The AI terminal includes a communication module connected to an electronic device, and a processor configured to perform AI processing for providing AI features to the electronic device. When connected to the electronic device, the processor is configured to obtain identification information from the electronic device, select at least one AI feature capable of being provided to the electronic device based on the identification information, collect basic information for generating the selected at least one AI feature, generate AI feature information by performing AI processing based on the collected basic information, and provide the AI feature information to the electronic device so that the electronic device executes the at least one AI feature.

## Description

### CROSS-REFERENCE TO RELATED APPLICATION(S)

Pursuant to 35 U.S.C. § 119(a), this application claims the benefit of earlier filing date and right of priority to Korean Provisional Patent Application No. 10-2024-0043197, filed on March 29, 2024, and Korean Patent Application No. 10-2024-0077057, filed on June 13, 2024, the contents of which are hereby incorporated by reference herein in its entirety.

### [Technical field]

The present disclosure relates to an AI terminal capable of providing AI feature to an electronic device connected to communication through AI processing of the AI terminal and its method for providing AI feature thereto.

### [Related Art]

In general, artificial intelligence (AI) is a field of computer engineering and information technology that studies methods for enabling computers to perform thinking, learning, self-development, etc. that can be performed by human intelligence, and means enabling computers to imitate human intelligent behavior.

In addition, AI does not exist by itself, but is directly or indirectly related to other fields of computer science. In particular, in modern times, attempts are being made to introduce artificial intelligence elements into various fields of information technology and utilize them to solve problems in those fields.

Meanwhile, technologies that use AI to recognize and learn the surrounding situation, provide the information that the user wants in the desired form, or perform the actions or features that the user wants are being actively studied.

Recently, electronic devices that provide such actions and features using AI have been attracting attention.

Electronic devices with AI features are widely used in home appliances such as refrigerators, dishwashers, and vacuum cleaners, and can perform various actions or features that the user wants according to the environment of each household and individual.

However, electronic devices with AI features are not only expensive, but also have the problem of complicated update processes for adding new features.

In other words, electronic devices with AI features have the inconvenience of requiring users to perform the update themselves or request the update from a product service center when adding new features through software updates, and when new features are added through hardware updates, users have to purchase new electronic devices with new features instead of the electronic devices they were previously using, which is an economic waste.

This resulted in unnecessary waste of resources.

Therefore, in the future, it is necessary to develop an AI terminal that performs AI processing so that AI features can be provided to various electronic devices in an easy and simple manner without economic waste.

### [Disclosure of the Invention ]

### [Technical problem]

The present disclosure aims to solve the above-mentioned problems and other problems.

The present disclosure aims to provide an AI terminal and an AI feature providing method thereof that can easily and simply add or expand AI features of an electronic device by providing AI feature information generated by performing AI processing to an electronic device so that the electronic device can perform AI features.

### [Technical Solution]

An artificial intelligence (AI) terminal according to one embodiment of the present disclosure can include a communication module connected to an electronic device, and a processor configured to perform AI processing for providing AI features to the electronic device. When connected to the electronic device, the processor is configured to obtain identification information from the electronic device, select at least one AI feature capable of being provided to the electronic device based on the identification information, collect basic information for generating the selected at least one AI feature, generate AI feature information by performing AI processing based on the collected basic information, and provide the AI feature information to the electronic device so that the electronic device executes the at least one AI feature.

An electronic device according to one embodiment of the present disclosure can include a communication module connected to an artificial intelligence (AI) terminal, a memory storing AI feature information provided from the AI terminal and a processor configured to perform an AI feature based on the AI feature information. The processor is configured to when receiving a request of identification information from the connected AI terminal, provide the identification information to the AI terminal, when receiving the AI feature information from the AI terminal, store the AI feature information in the memory, when receiving an AI feature control command from the AI terminal, perform the AI feature based on the AI feature information, and generate and transmit AI feature performance result information to the AI terminal.

A system of providing artificial intelligence (AI) features according to one embodiment of the present disclosure can include an AI terminal configured to perform AI processing to provide at least one AI feature to an electronic device and the electronic device configured to perform the at least one AI feature based on AI feature information provided from the AI terminal. The AI terminal is configured to when the electronic device is connected, obtain identification information from the electronic device, select the at least one AI feature capable of being provided to the electronic device based on the identification information, collect basic information for generating the selected at least one AI feature, generate the AI feature information by performing AI processing based on the collected basic information, and provide the AI feature information to the electronic device so that the electronic device executes the at least one AI feature.

A method for providing an artificial intelligence (AI) feature of an AI terminal that is connected to an electronic device according to an embodiment of the present disclosure can include connecting to the electronic device, obtaining identification information from the electronic device when the electronic device is connected, selecting an AI feature capable of being provided to the electronic device based on the identification information, collecting basic information for generating the selected AI feature, generating AI feature information by performing AI processing based on the collected basic information, and providing the AI feature information to the electronic device so that the electronic device executes the AI feature.

A method for performing an artificial intelligence (AI) feature of an electronic device that is connected to an AI terminal according to an embodiment of the present disclosure can include checking an attachment connection with the AI terminal, connecting to the AI terminal when the AI terminal is attached, receiving a request for identification information from the connected AI terminal, providing the identification information to the AI terminal, receiving AI feature information from the AI terminal, performing the AI feature based on the AI feature information, and generating and transmitting AI feature execution result information to the AI terminal.

### [Effects of the invention]

According to one embodiment of the present disclosure, the AI terminal provides AI feature information generated by performing AI processing to the electronic device, thereby allowing the electronic device to perform the AI feature, thereby easily and simply adding or expanding the AI feature of the electronic device, thereby reducing unnecessary economic waste.

In addition, the present disclosure can provide the optimal AI feature to the electronic device by generating a customized AI feature for each electronic device, so that user convenience and satisfaction can be greatly improved.

### [Brief description of drawings]

FIG. 1 illustrates an artificial intelligence device according to one embodiment of the present disclosure.
FIG. 2 illustrates an artificial intelligence server according to one embodiment of the present disclosure.
FIG. 3 illustrates an artificial intelligence system according to one embodiment of the present disclosure.
FIG. 4 is a drawing for explaining an AI feature providing system according to one embodiment of the present disclosure.
FIG. 5 is a drawing for explaining a communication connection process between an AI terminal and an electronic device according to one embodiment of the present disclosure.
FIG. 6A and FIG. 6B are drawings for explaining a process of connecting an AI terminal and an electronic device according to an embodiment of the present disclosure.
FIG. 7 is a drawing for explaining an AI terminal providing an AI feature according to an embodiment of the present disclosure.
FIG. 8A to FIG. 8D are drawings for explaining a process of generating and providing an AI feature of an AI terminal according to an embodiment of the present disclosure.
FIG. 9 is a drawing for explaining a process of generating an electronic device list of an AI terminal according to an embodiment of the present disclosure.
FIG. 10 is a drawing for explaining a process of selecting an AI feature that can be provided by an AI terminal according to an embodiment of the present disclosure.
FIG. 11 is a drawing for explaining a method of providing an AI feature of an AI terminal according to an embodiment of the present disclosure.

### [Detailed description]

Hereinafter, the embodiments disclosed in this specification will be described in detail with reference to the attached drawings. Regardless of the drawing symbols, identical or similar components will be given the same reference numbers and redundant descriptions thereof will be omitted. The suffixes "module" and "part" used for components in the following description are given or used interchangeably only for the convenience of writing the specification, and do not have distinct meanings or roles in themselves. In addition, when describing the embodiments disclosed in this specification, if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the ideas and technical scope of the present disclosure.

Terms including ordinal numbers such as first, second, etc. may be used to describe various components, but the components are not limited by the terms. The terms are used only for the purpose of distinguishing one component from another.

When a component is referred to as being "connected" to another component, it should be understood that it may be directly connected or connected to that other component, but there may be other components in between. On the other hand, when a component is referred to as being "directly connected" or "directly connected" to another component, it should be understood that there are no other components in between.

Also, throughout this specification, the terms neural network, neural network, and network function may be used interchangeably. A neural network may be composed of a set of interconnected computational units, which may generally be referred to as "nodes." These "nodes" may also be referred to as "neurons." A neural network is composed of at least two or more nodes. Nodes (or neurons) constituting neural networks may be interconnected by one or more "links."

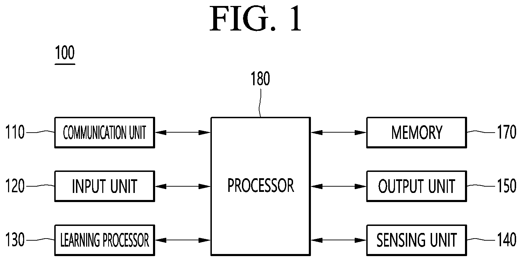

FIG. 1 illustrates an AI device 100 according to an embodiment of the present disclosure.

The AI device 100 can be implemented as a fixed or movable device, such as a TV, a projector, a mobile phone, a smart phone, a desktop computer, a laptop, a digital broadcasting terminal, a personal digital assistant (PDA), a portable multimedia player (PMP), a navigation device, a tablet PC, a wearable device, a set-top box (STB), a Digital Multimedia Broadcasting (DMB) receiver, a radio, a washing machine, a refrigerator, a desktop computer, a digital signage, a robot, a vehicle, etc.

Referring to FIG. 1, the AI device 100 can include a communication unit 110, an input unit 120, a learning processor 130, a sensing unit 140, an output unit 150, a memory 170, and a processor 180.

The communication unit 110 can transmit and receive data with external devices such as other AI devices 100a to 100e or AI servers 200 using wired and wireless communication technology. For example, the communication unit 110 can transmit and receive sensor information, user input, learning models, control signals, etc. with external devices.

At this time, the communication technologies used by the communication unit 110 include Global System for Mobile communication (GSM), Code Division Multi Access (CDMA), Long Term Evolution (LTE), 5G, Wireless LAN (WLAN), Wireless-Fidelity (Wi-Fi), Bluetooth^{™}, Radio Frequency Identification (RFID), Infrared Data Association (IrDA), ZigBee, Near Field Communication (NFC), etc.

The input unit 120 can obtain various types of data.

At this time, the input unit 120 can include a camera for inputting a video signal, a microphone for receiving an audio signal, a user input unit for receiving information from a user, etc. Here, the camera or microphone can be treated as a sensor, and the signal obtained from the camera or microphone can be referred to as sensing data or sensor information.

The input unit 120 can obtain input data to be used when obtaining output using learning data for model learning and a learning model. The input unit 120 can obtain unprocessed input data, and in this case, the processor 180 or the learning processor 130 can extract input features as preprocessing for the input data.

The learning processor 130 can learn a model composed of an artificial neural network using learning data. Here, the learned artificial neural network can be referred to as a learning model. The learning model can be used to infer a result value for new input data that is not learning data, and the inferred value can be used as a basis for judgment to perform a certain action.

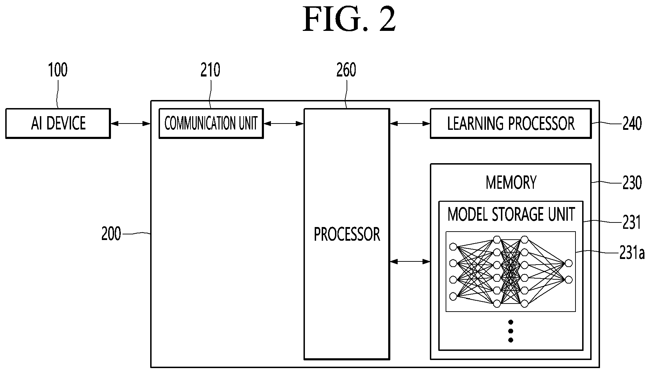

At this time, the learning processor 130 can perform AI processing together with the learning processor 240 of the AI server 200 of FIG. 2.

At this time, the learning processor 130 can include a memory integrated or implemented in the AI device 100. Alternatively, the learning processor 130 can be implemented using a memory 170, an external memory directly coupled to the AI device 100, or a memory maintained in an external device.

The sensing unit 140 can obtain at least one of internal information of the AI device 100, information about the surrounding environment of the AI device 100, and user information using various sensors.

At this time, the sensors included in the sensing unit 140 include proximity sensors, light sensors, acceleration sensors, magnetic sensors, gyro sensors, inertial sensors, RGB sensors, IR sensors, fingerprint recognition sensors, ultrasonic sensors, light sensors, microphones, lidar, radar, etc.

The output unit 150 can generate outputs related to vision, hearing, or touch.

At this time, the output unit 150 can include a display unit that outputs visual information, a speaker that outputs auditory information, a haptic module that outputs tactile information, etc.

The memory 170 can store data that supports various functions of the AI device 100. For example, the memory 170 can store input data, learning data, learning models, learning history, etc. acquired from the input unit 120.

The processor 180 can determine at least one executable operation of the AI device 100 based on information determined or generated using a data analysis algorithm or a machine learning algorithm. Then, the processor 180 can control the components of the AI device 100 to perform the determined operation.

To this end, the processor 180 can request, search, receive, or utilize data from the learning processor 130 or the memory 170, and control the components of the AI device 100 to perform a predicted operation or an operation determined to be desirable among the at least one executable operation.

At this time, the processor 180 can generate a control signal for controlling the external device if linkage with an external device is required to perform the determined operation, and transmit the generated control signal to the external device.

The processor 180 can obtain intention information for a user input, and determine the user's requirement based on the obtained intention information.

At this time, the processor 180 can obtain intention information corresponding to the user input by using at least one of a Speech To Text (STT) engine for converting voice input into a string or a Natural Language Processing (NLP) engine for obtaining intention information of natural language.

At this time, at least one of the STT engine or the NLP engine can be configured with an artificial neural network that is at least partially learned according to a machine learning algorithm. In addition, at least one of the STT engine or the NLP engine can be learned by the learning processor 130, learned by the learning processor 240 of the AI server 200, or learned by distributed processing of these.

The processor 180 can collect history information including the operation content of the AI device 100 or the user's feedback on the operation, and store it in the memory 170 or the learning processor 130, or transmit it to an external device such as the AI server 200. The collected history information can be used to update the learning model.

The processor 180 can control at least some of the components of the AI device 100 to drive the application program stored in the memory 170. Furthermore, the processor 180 can operate two or more of the components included in the AI device 100 in combination with each other to drive the application program.

FIG. 2 illustrates an AI server 200 according to an embodiment of the present disclosure.

Referring to FIG. 2, the AI server 200 can mean a device that trains an artificial neural network using a machine learning algorithm or uses a trained artificial neural network. Here, the AI server 200 can be composed of multiple servers to perform distributed processing, and can be defined as a 5G network. At this time, the AI server 200 can be included as a part of the AI device 100 and can perform at least a part of the AI processing together.

The AI server 200 can include a communication unit 210, a memory 230, a learning processor 240, a processor 260, etc.

The communication unit 210 can transmit and receive data with an external device such as the AI device 100.

The memory 230 can include a model storage unit 231. The model storage unit 231 can store a model (or artificial neural network, 231a) that is being learned or has been learned through the learning processor 240.

The learning processor 240 can use learning data to learn the artificial neural network 231a. The learning model can be used while being installed in the AI server 200 of the artificial neural network, or can be installed in an external device such as an AI device 100 and used.

The learning model can be implemented by hardware, software, or a combination of hardware and software. If part or all of the learning model is implemented by software, one or more instructions that constitute the learning model can be stored in the memory 230.

The processor 260 can infer a result value for new input data using the learning model and generate a response or control command based on the inferred result value.

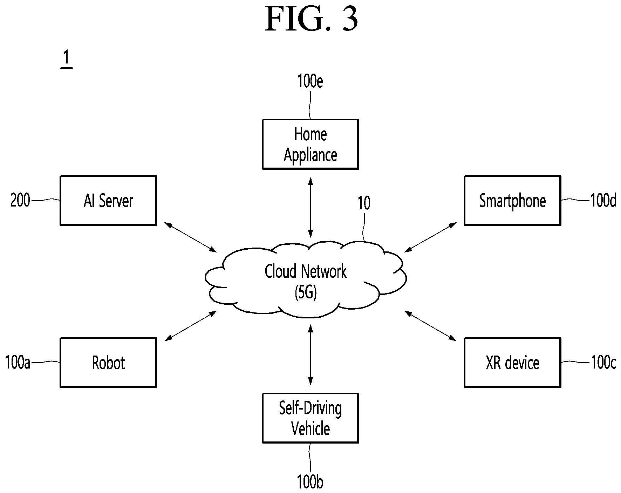

FIG. 3 illustrates an AI system 1 according to an embodiment of the present invention.

Referring to FIG. 3, the AI system 1 is connected to at least one of an AI server 200, a robot 100a, an autonomous vehicle 100b, an XR device 100c, a smartphone 100d, or an appliance 100e with a cloud network 10. Here, the robot 100a, the autonomous vehicle 100b, the XR device 100c, the smartphone 100d, or the appliance 100e to which AI technology is applied can be referred to as an AI device 100a to 100e.

The cloud network 10 can mean a network that constitutes part of a cloud computing infrastructure or exists within a cloud computing infrastructure. Here, the cloud network 10 can be configured using a 3G network, a 4G or Long-Term Evolution (LTE) network, a 5G network, or the like.

That is, each device 100a to 100e, 200 constituting the AI system 1 can be connected to each other through the cloud network 10. In particular, each device 100a to 100e, 200 can communicate with each other through the base station, but can also communicate with each other directly without going through the base station.

The AI server 200 can include a server that performs AI processing and a server that performs calculations on big data.

The AI server 200 is connected to at least one or more of the AI devices constituting the AI system 1, such as a robot 100a, an autonomous vehicle 100b, an XR device 100c, a smartphone 100d, or a home appliance 100e, through the cloud network 10, and can assist at least a part of the AI processing of the connected AI devices 100a to 100e.

At this time, the AI server 200 can train an artificial neural network according to a machine learning algorithm on behalf of the AI device 100a to 100e, and can directly store the learning model or transmit it to the AI device 100a to 100e.

At this time, the AI server 200 can receive input data from the AI device 100a to 100e, infer a result value for the received input data using the learning model, and generate a response or control command based on the inferred result value and transmit it to the AI device 100a to 100e.

Alternatively, the AI device 100a to 100e can directly infer a result value for the input data using the learning model, and generate a response or control command based on the inferred result value.

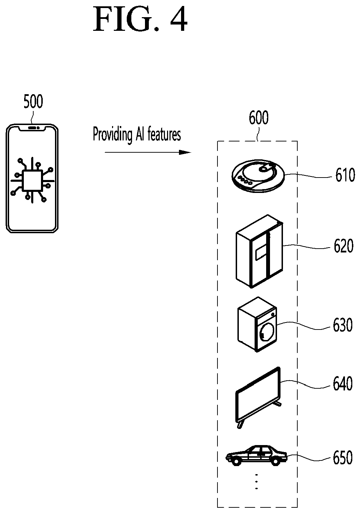

FIG. 4 is a drawing for explaining an AI feature providing system according to an embodiment of the present disclosure.

As illustrated in FIG. 4, the AI feature providing system of the present disclosure can include an AI terminal 500 that performs AI processing to provide an AI feature to an electronic device 600, and an electronic device 600 that performs an AI feature based on AI feature information provided from the AI terminal 500.

Here, the AI terminal 500 is an artificial intelligence device that can perform AI processing, and can include all standing devices such as a personal computer (PC), a network TV, a hybrid broadcast broadband TV (HBBTV), a smart TV, an Internet protocol TV (IPTV), and the like, and mobile devices (or handheld device) such as a smart phone, a tablet PC, a notebook, a personal digital assistant (PDA), a smart watch, a smart glass, and the like.

The AI terminal 500 can be composed of one or more cores, and can include a processor for data analysis and deep learning, such as a neural network processing unit (NPU), a central processing unit (CPU), a general-purpose graphics processing unit (GPGPU), and a tensor processing unit (TPU).

The processor of the AI terminal 500 can read a computer program stored in a memory to perform data processing for machine learning, perform operations for neural network learning, and perform calculations for neural network learning, such as processing of input data for learning in deep learning (DL), feature extraction from input data, error calculation, and updating of neural network weights using backpropagation.

When the AI terminal 500 is connected to the electronic device 600, it obtains identification information from the electronic device 600, selects an AI feature that can be provided to the electronic device 600 based on the identification information, collects basic information for generating the selected AI feature, performs AI processing based on the collected basic information to generate AI feature information, and provides the AI feature information to the electronic device 600 so that the electronic device 600 can execute the AI feature.

Here, the AI terminal 500 stores at least one AI model and can provide various service results through the pre-learned AI model in response to the user's command.

As an example, the AI model can be a deep neural network (DNN) that includes multiple hidden layers in addition to an input layer and an output layer, and can identify latent structures of data such as photos, text, video, voice, and music.

And, the electronic device 600 can include various electronic devices such as home appliances and vehicles, as electronic devices 600 that do not have AI features or can perform only a part of AI features.

As an example, the electronic device 600 can include a robot vacuum cleaner 610, a refrigerator 620, a washing machine 630, a TV 640, and a vehicle 650 that do not have an AI model or perform only a part of the features of an AI model.

Here, the electronic device 600 can receive AI feature information provided by the AI terminal 500 to add a new AI feature or expand an existing AI feature, and can perform the additional or expanded AI feature to provide various AI services to the user.

When the electronic device 600 receives an identification information request from an AI terminal 500 connected to communication, it provides the identification information to the Al terminal 500, when it receives Al feature information from the AI terminal 500, it stores the AI feature information, and when it receives an AI feature control command from the AI terminal 500, it performs an AI feature based on the AI feature information, and generates AI feature performance result information and transmits it to the AI terminal 500.

Here, the electronic device 600 includes a wireless communication module and can receive AI feature information from an AI terminal 500 connected to wireless communication through the wireless communication module.

**In** some cases, the electronic device 600 includes an interface and can receive AI feature information from an AI terminal 500 connected to wired communication through the interface.

**In** another case, the electronic device 600 can include a detachable module that allows the AI terminal 500 to be detached, and when the AI terminal 500 is connected through the detachable module, the electronic device 600 can perform a communication connection with the AI terminal 500, and when the communication connection is established with the AI terminal 500, the electronic device 600 can receive AI feature information from the connected AI terminal 500.

Meanwhile, when the AI terminal 500 is connected to the electronic device 600, the AI terminal 500 can obtain identification information and pre-stored AI feature information from the electronic device 600, and, based on the identification information, determine whether the AI feature information pre-stored in the electronic device 600 is updated, and, when it is determined that the AI feature information pre-stored in the electronic device 600 requires an update, collect update information for an AI feature update, perform AI processing based on the collected update information to generate updated AI feature information, and provide the updated AI feature information to the electronic device 600 so that the electronic device 600 can execute the updated AI feature.

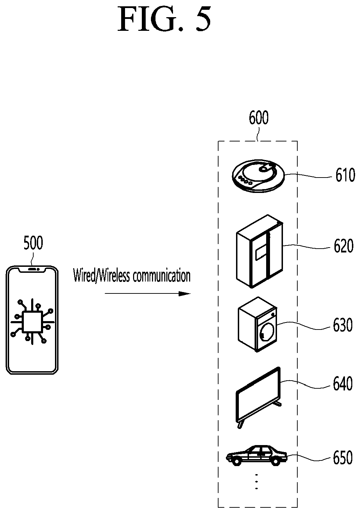

FIG. 5 is a drawing for explaining a communication connection process between an AI terminal and an electronic device according to an embodiment of the present disclosure.

As illustrated in FIG. 5, when a user input for selecting an AI feature additional execution app is received, the AI terminal 500 of the present disclosure performs a wireless communication connection to a surrounding electronic device 600, and when at least one electronic device 600 is connected to wireless communication, it obtains identification information from the electronic device 600 connected to wireless communication, and can group and store electronic devices capable of wireless communication based on the identification information.

When the AI terminal 500 of the present disclosure obtains identification information from the electronic device 600 connected to wireless communication, it can identify whether the electronic device 600 is a robot vacuum cleaner 610, a refrigerator 620, a washing machine 630, a TV 640, a vehicle 650, etc. based on the identification information.

And, the AI terminal 500 of the present disclosure can analyze whether the identified electronic device 600 is an electronic device without an AI model or an electronic device that performs only some features of the AI model.

Then, the AI terminal 500 of the present disclosure can select AI features required for the electronic device 600, AI features that can be additionally provided, and AI features that can be expanded based on the analysis results.

In addition, the AI terminal 500 of the present disclosure can generate a notification message notifying of the wireless communication disconnection and a recommendation message recommending a wired communication connection with a desired electronic device when wireless communication is not connected with at least one electronic device 600, and output the notification message and the recommendation message together on the display screen.

Here, the AI terminal 500 of the present disclosure, when a wired communication connection is established with a specific electronic device 600 selected by the user after the notification message is output, acquires identification information from the electronic device 600 connected to the wired communication, and generates information on the electronic device connected to the wired communication and a communication connection completion message based on the identification information and outputs them on the display screen.

Meanwhile, the AI terminal 500 of the present disclosure, when a user input for selecting an AI feature additional execution app is received, checks whether there is a wired communication connection with the electronic device 600 through the interface, and when there is a wired communication connection with the electronic device 600, acquires identification information from the electronic device 600 connected to the wired communication, and generates information on the electronic device connected to the wired communication and a communication connection completion message based on the identification information and outputs them on the display screen.

For example, the interface can be a wired communication interface such as USB, UART, or SPI, or one of wireless communication interfaces such as Wi-Fi, Bluetooth, or RFID.

In addition, when checking whether there is a wired communication connection with the electronic device 600, the AI terminal 500 of the present disclosure can generate a notification message notifying that there is no communication connection if there is no wired communication with the electronic device 600 for a preset time from the time when a user input for selecting an AI feature additional execution app is received, and can output the notification message on the display screen.

Meanwhile, the electronic device 600 can include a wireless communication module that is wirelessly connected to the AI terminal 500, and can receive AI feature information from the AI terminal 500 that is wirelessly connected.

In some cases, the electronic device 600 can include an interface that is wiredly connected to the AI terminal 500, and can receive AI feature information from the AI terminal 500 that is wiredly connected.

As an example, the interface can be one of wired communication, such as USB, UART, or SPI.

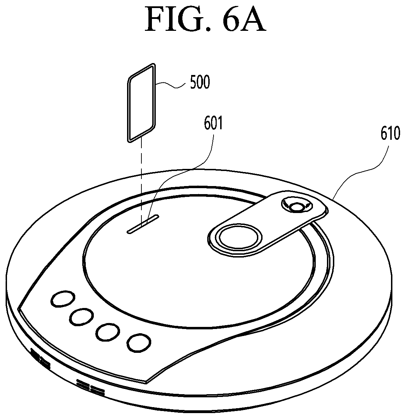

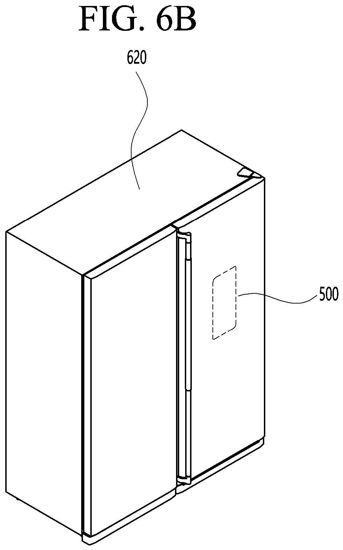

FIG. 6A and FIG. 6B are drawings for explaining a process of connecting an AI terminal and an electronic device according to an embodiment of the present disclosure.

FIG. 6A is a drawing illustrating an example in which an AI terminal 500 of the present disclosure is mounted on a robot cleaner 610 which is an electronic device, and FIG. 6B is a drawing illustrating another example in which an AI terminal 500 of the present disclosure is mounted on a refrigerator 620 which is an electronic device.

As shown in FIG. 6A and FIG. 6B, the AI terminal 500 of the present disclosure confirms connection with an electronic device when a user input for selecting an AI feature additional execution app is received, performs communication connection with the electronic device when connection with the electronic device is confirmed, obtains identification information from the electronic device connected to the communication, and generates information on the electronic device connected to the communication and a communication connection completion message based on the identification information and outputs them on a display screen.

Here, the AI terminal 500 of the present disclosure can include a Bluetooth Low Energy (BLE) communication module, and can perform a communication connection with an electronic device through the BLE communication module.

In addition, the AI terminal 500 of the present disclosure can include a sensor that senses connection with an electronic device, and can confirm connection with an electronic device based on a sensing signal of the sensor.

As an example, the sensor can include a hall sensor.

Here, the AI terminal 500 of the present disclosure can sense connection and separation with an electronic device by recognizing a magnet of the electronic device through the hall sensor.

Meanwhile, the electronic devices, such as the robot cleaner 610 and the refrigerator 620, can include a detachable module 601 from which the AI terminal 500 can be detached. When the AI terminal 500 is connected through the detachable module 601, a communication connection is performed with the AI terminal 500, and when the communication connection is made with the AI terminal 500, AI feature information can be received from the AI terminal 500 connected to the communication.

Here, the electronic device can include a BLE communication module, and a communication connection with the AI terminal 500 can be performed through the BLE communication module.

In addition, the detachable module 601 of the electronic device can include a sensor that senses the connection of the AI terminal 500, and the connection of the AI terminal 500 can be confirmed based on the sensing signal of the sensor.

For example, the sensor can include a hall sensor, and can sense the connection and separation with the AI terminal 500 by recognizing the magnet of the AI terminal 500.

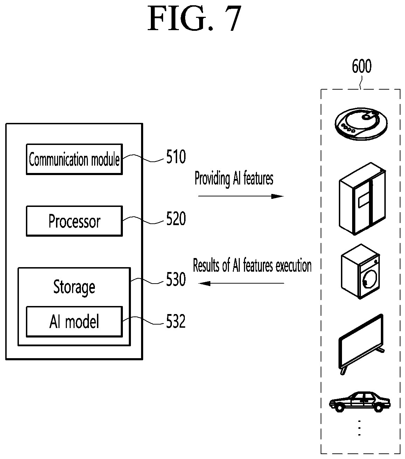

FIG. 7 is a drawing for explaining an AI terminal providing an AI feature according to an embodiment of the present disclosure.

As illustrated in FIG. 7, the AI terminal 500 of the present disclosure can include a communication unit 601 that is communicatively connected to an electronic device 600, a memory 530 that stores a pre-learned AI model 532, and a processor 520 that performs AI processing to provide an AI feature to the electronic device 600.

For example, the AI model 532 can be a DNN, which can be a neural network including multiple hidden layers in addition to an input layer and an output layer, and can perform AI processing for generating an AI feature.

And, the processor 520, when connected to the electronic device 600, obtains identification information from the electronic device 600, selects an AI feature that can be provided to the electronic device 600 based on the identification information, collects basic information for generating the selected AI feature, performs AI processing based on the collected basic information to generate AI feature information, and provides the AI feature information to the electronic device 600 so that the electronic device 600 can execute the AI feature.

As an example, when obtaining the identification information, the processor 520 performs a wireless communication connection to a surrounding electronic device 600 when a user input for selecting an AI feature additional execution app is received, and when connected to at least one electronic device 600 by wireless communication, obtains identification information from the electronic device 600 connected by wireless communication, groups and stores electronic devices 600 capable of wireless communication based on the identification information, and generates a list of electronic devices capable of wireless communication and outputs it on the display screen.

Here, when generating a list of electronic devices capable of wireless communication, the processor 520 can output the main AI feature item among AI feature items that can be provided by each electronic device.

For example, the processor 520 can extract the main AI feature item based on previously stored AI feature provision history information or preset AI feature information that can be provided by each electronic device and include it in the list of electronic devices.

In addition, after outputting the list of electronic devices capable of wireless communication on the display screen, if a user input for selecting a specific electronic device from the list of electronic devices is received, the processor 520 can analyze the AI feature provided to the specific electronic device.

In addition, when wireless communication is not connected with at least one electronic device 600, the processor 520 can generate a notification message notifying the non-connection of wireless communication and a recommendation message recommending a wired communication connection with the desired electronic device, and output the notification message and the recommendation message together on the display screen.

And, the processor 520, when a wired communication connection is established with a specific electronic device 600 selected by the user after the notification message is output, can obtain identification information from the electronic device 600 connected to the wired communication, and generate information on the electronic device connected to the wired communication and a communication connection completion message based on the identification information and output them on the display screen.

As another embodiment, when obtaining identification information, the processor 520 can check whether there is a wired communication connection with the electronic device 600 through the interface when a user input for selecting an AI feature additional execution app is received, and when there is a wired communication connection with the electronic device 600, can obtain identification information from the electronic device 600 connected to the wired communication, and generate information on the electronic device connected to the wired communication and a communication connection completion message based on the identification information and output them on the display screen.

As an example, the interface can be one of wired communications such as USB, UART, and SPI.

And, when checking whether there is a wired communication connection with the electronic device 600, if the wired communication with the electronic device 600 is not connected for a preset time from the time when the user input for selecting the AI feature additional execution app is received, the processor 520 can generate a notification message notifying the communication disconnection and output the notification message on the display screen.

As another embodiment, when obtaining identification information, the processor 520 can confirm the connection with the electronic device 600 when the user input for selecting the AI feature additional execution app is received, perform a communication connection with the electronic device 600 if the connection with the electronic device 600 is confirmed, and if the communication connection with the electronic device 600 is established, obtain identification information from the electronic device 600 connected to the communication, and generate information on the electronic device connected to the communication and a communication connection completion message based on the identification information and output them on the display screen.

For example, the communication unit 601 can include a BLE communication module, and the processor 520 can perform a communication connection with the electronic device 600 through the BLE communication module.

Here, the AI terminal of the present disclosure can include a sensor that senses connection with the electronic device 600, and the processor 520 can confirm connection with the electronic device 600 based on a sensing signal of the sensor.

For example, the sensor can include a hall sensor, and can sense connection and separation with the electronic device 600 by recognizing a magnet of the electronic device 600.

Next, the AI terminal of the present disclosure can include a memory 530 that stores a list of AI features for each electronic device in which AI feature items that can be provided for each electronic device are preset. When selecting an AI feature, the processor 520 can extract an AI feature item of the electronic device corresponding to the identification information from the list of AI features for each electronic device stored in the memory 530, and if there is only one extracted AI feature item, the processor can select an AI feature that can be provided to the electronic device 600 based on the AI feature item.

In some cases, if there are multiple extracted AI feature items, the processor 520 can generate a user selection window including multiple AI feature items and output it on the display screen, and if a user input for selecting an AI feature item is received through the user selection window, the processor can select an AI feature that can be provided to the electronic device 600 based on the selected AI feature item.

In another case, if there are multiple extracted AI feature items, the processor 520 can automatically select the AI feature item that has been provided the most based on previously stored AI feature provision history information, and select an AI feature that can be provided to the electronic device 600 based on the automatically selected AI item.

Next, when collecting basic information for generating an AI feature, the processor 520 can extract necessary information items for generating the selected AI feature, divide the extracted necessary information items into first necessary information items that can be self-acquired and second necessary information items that cannot be self-acquired, and collect first basic information corresponding to the first necessary information item from the internal memory, and collect second basic information corresponding to the second necessary information item from the external memory.

Here, the external memory can include a memory included in an electronic device located nearby and a database included in an external server.

In addition, when collecting second basic information corresponding to the second necessary information item, the processor 520 can first collect second basic information from a memory included in an electronic device 600 located in the vicinity, and secondarily collect second basic information that was not collected in the first collection from a database included in an external server.

Here, when collecting all second basic information from the electronic device 600 located in the vicinity, the processor 520 can stop collecting second basic information from the external server.

As an example, when collecting first basic information corresponding to the first necessary information item, the processor 520 can activate a sensor module for collecting first basic information while connected to a movable electronic device 600, and control the movement of the electronic device 600 to collect first basic information through the sensor module.

And, when generating AI feature information, the processor 520 checks whether a first result value for some overlapping AI processing already exists based on previously stored AI feature provision history information, and if a first result value for some overlapping AI processing exists, it performs only the remaining AI processing excluding the overlapping AI processing among the entire AI processing for generating AI feature information to generate a second result value, and can generate AI feature information based on the first result value and the second result value.

Here, the processor 520 performs the entire AI processing for generating AI feature information based on the collected basic information to generate a final result value, and can generate AI feature information based on the final result value.

In addition, when checking whether the first result value already exists, the processor 520 checks whether the first result value for some overlapping AI processing exists in the internal memory or the external memory, and if the first result value exists in the internal memory, the first result value can be obtained from the internal memory, and if the first result value exists in the external memory, the first result value can be obtained from the external memory of an external electronic device or an external server.

Here, the processor 520 can perform the entire AI processing for generating AI feature information based on the collected basic information to generate a final result value if the first result value does not exist in the internal memory or the external memory, and can generate AI feature information based on the final result value.

Next, when the processor 520 provides AI feature information to the electronic device 600, it transmits the AI feature information to the electronic device 600, and when it receives an AI feature information storage completion message from the electronic device 600, it transmits an AI feature control command to the electronic device 600 so that the electronic device 600 performs the AI feature, and can receive AI feature performance result information from the electronic device 600.

Here, the processor 520 can determine whether to disconnect the communication with the electronic device 600 based on the AI feature performance result information.

For example, the processor 520 can disconnect the communication connection with the electronic device 600 if the AI feature of the electronic device 600 is successfully performed based on the AI feature performance result information, maintain the communication connection with the electronic device 600 if the AI feature of the electronic device 600 is failed, provide the AI feature information to the electronic device 600, and retransmit the AI feature information to the electronic device 600 so that the AI feature of the electronic device 600 can be re-performed.

Next, the processor 520 can re-perform the AI processing based on the collected basic information so that the AI feature of the electronic device 600 is re-failed, and re-generate the AI feature information and transmit the re-generated AI feature information to the electronic device 600.

Meanwhile, the processor 520, when connected to the electronic device 600, obtains identification information and pre-stored AI feature information from the electronic device 600, checks whether the pre-stored AI feature information in the electronic device 600 is updated based on the identification information, and if it is determined that the pre-stored AI feature information in the electronic device 600 requires an update, collects update information for AI feature update, performs AI processing based on the collected update information to generate updated AI feature information, and provides the updated AI feature information to the electronic device 600 so that the electronic device 600 executes the updated AI feature.

Here, the processor 520 can first collect update information from an internal memory, and if the update information does not exist in the internal memory, secondarily collect it from an external memory.

In addition, the processor 520 can first collect update information from a memory included in an electronic device 600 located nearby when collecting from an external memory, and secondarily collect update information that was not collected in the first collection from a database included in an external server.

In this way, the present disclosure provides AI feature information generated by performing AI processing to an electronic device so that the electronic device performs an AI feature, thereby easily and simply adding or expanding the AI feature of the electronic device, thereby reducing unnecessary economic waste.

In addition, the present disclosure can provide an optimal AI feature to the electronic device by generating a customized AI feature for each electronic device, so that user convenience and satisfaction can be greatly improved.

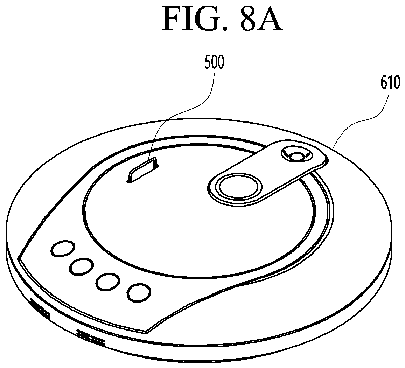

FIGS. 8A to 8D are drawings for explaining the process of generating and providing AI features of an AI terminal according to an embodiment of the present disclosure.

FIGS. 8A to 8D are drawings for explaining an embodiment of providing AI features by mounting an AI terminal of the present disclosure on a robot cleaner.

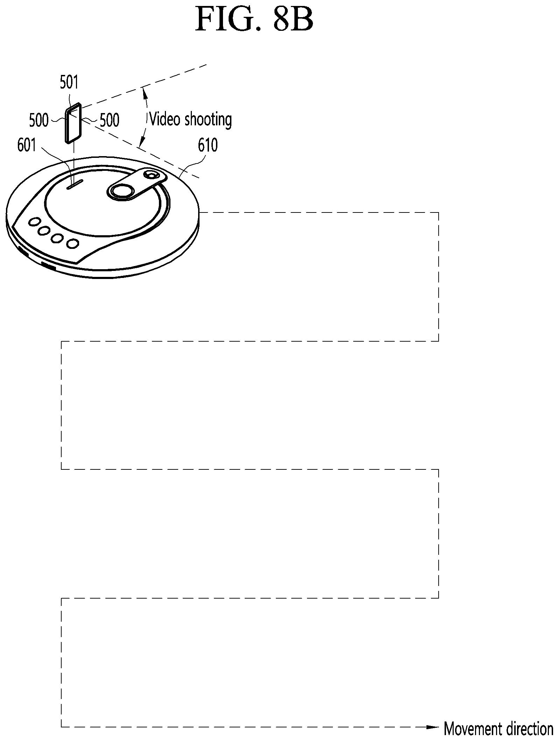

As illustrated in FIGS. 8A and 8B, the AI terminal 500 of the present disclosure can confirm connection with the robot cleaner 610 when a user input for selecting an AI feature addition execution app is received.

Here, the AI terminal 500 of the present disclosure can be inserted and mounted into a detachable module of the robot cleaner 610.

At this time, the AI terminal 500 of the present disclosure can include a sensor that senses connection with the robot cleaner 610, and can confirm connection with the robot cleaner 610 based on a sensing signal of the sensor.

For example, the sensor can include a hall sensor, which can sense the connection and separation with the robot cleaner 610 by recognizing a magnet located within the detachment module of the robot cleaner 610.

In this way, the sensor that senses the connection between the AI terminal 500 and the robot cleaner 610 can be located in the AI terminal 500 or the robot cleaner 610.

Next, the AI terminal 500 of the present disclosure performs a communication connection with the robot cleaner 610 when the connection with the robot cleaner 610 is confirmed, and when the communication connection with the robot cleaner 610 is established, identification information can be obtained from the connected robot cleaner 610.

Next, the AI terminal 500 of the present disclosure can extract AI feature items of the robot cleaner 610 corresponding to the identification information from the pre-stored AI feature list of each electronic device, and select AI features that can be provided to the robot cleaner 610 based on the extracted AI feature items.

As an example, the AI feature that can be provided to the robot cleaner 610 can include an AI feature that performs cleaning along an optimal path.

In some cases, the AI terminal 500 of the present disclosure can generate a user selection window including a plurality of AI feature items and output it on the display screen when there are multiple extracted AI feature items, and when a user input for selecting an AI feature item through the user selection window is received, the AI feature that can be provided to the robot cleaner 610 can be selected based on the selected AI feature item.

Here, the AI terminal 500 of the present disclosure can automatically select the AI feature item that has been provided the most based on previously stored AI feature provision history information if there are multiple extracted AI feature items, and select an AI feature that can be provided to the robot cleaner 610 based on the automatically selected AI item.

For example, if the AI feature items that can be provided to the robot cleaner include a first AI feature item that finds a dirty cleaning area and performs cleaning, a second AI feature item that performs cleaning by classifying the floor material, and a third AI feature item that performs cleaning along an optimal path, if the AI feature that performs cleaning along an optimal path is provided the most based on previously stored AI feature provision history information, the third AI feature item that performs cleaning along an optimal path among the multiple AI feature items can be automatically selected, and the AI feature that can be provided to the robot cleaner 610 based on the automatically selected third AI feature item.

As shown in FIG. 8A and FIG. 8B, for example, the AI terminal 500 of the present disclosure requires basic information such as a map of the cleaning area, furniture locations, and obstacle locations in order to generate an AI feature that performs cleaning along the optimal path when an AI feature item that performs cleaning along the optimal path is selected. Therefore, in order to obtain basic information, the camera 501 is activated, the movement of the robot cleaning device 610 is controlled to capture the cleaning area, and the captured image is analyzed to obtain necessary basic information.

In this way, the AI terminal 500 of the present disclosure can activate a sensor module for collecting basic information while connected to a movable electronic device, and control the movement of the electronic device to collect basic information through the sensor module.

In some cases, when collecting basic information for generating an AI feature, the AI terminal 500 of the present disclosure can extract necessary information items for generating a selected AI feature, separate the extracted necessary information items into first necessary information items that can be acquired by itself and second necessary information items that cannot be acquired by itself, collect first basic information corresponding to the first necessary information item from an internal memory, and collect second basic information corresponding to the second necessary information item from an external memory.

Here, the external memory can include a memory included in an electronic device located nearby and a database included in an external server.

In another case, when collecting second basic information corresponding to the second necessary information item, the AI terminal 500 of the present disclosure can first collect second basic information from a memory included in an electronic device located nearby, and secondarily collect second basic information that was not collected in the first collection from a database included in an external server.

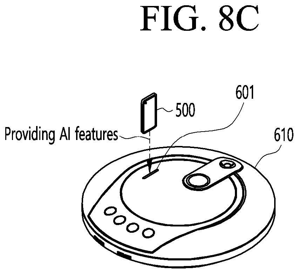

Then, as illustrated in FIG. 8C, the AI terminal 500 of the present disclosure can collect basic information for generating an AI feature and perform AI processing based on the collected basic information to generate AI feature information.

As an example, the AI terminal 500 of the present disclosure can perform AI processing based on an image captured of a cleaning area to generate optimal path information along which the robot cleaner 610 wishes to perform cleaning.

Then, the AI terminal 500 of the present disclosure can provide AI feature information including the generated optimal path information to the robot cleaner 610.

Here, the AI terminal 500 of the present disclosure, when generating AI feature information, checks whether a first result value for some overlapping AI processing already exists based on previously stored AI feature provision history information, and if a first result value for some overlapping AI processing exists, performs only the remaining AI processing excluding the overlapping AI processing among the entire AI processing for generating AI feature information to generate a second result value, and generates AI feature information based on the first result value and the second result value.

As an example, the AI terminal 500 of the present disclosure, when generating AI feature information including optimal path information, performs AI processing only for AI processing for obstacle locations and AI processing for furniture locations, excluding AI processing related to the first result value, if a first result value for AI processing performed based on a map for a cleaning area already exists, and thus generates a second result value, so that the AI processing speed can be fast, efficient, and economical.

Here, the AI terminal 500 of the present disclosure can perform full AI processing for generating AI feature information based on the collected basic information if the first result value does not exist, generate a final result value, and generate AI feature information based on the final result value.

In addition, when checking whether the first result value already exists, the AI terminal 500 of the present disclosure can check whether the first result value for some overlapping AI processing exists in the internal memory or the external memory, and if the first result value exists in the internal memory, can obtain the first result value from the internal memory, and if the first result value exists in the external memory, can obtain the first result value from the external memory of an external electronic device or an external server.

Here, the AI terminal 500 of the present disclosure can perform full AI processing for generating AI feature information based on the collected basic information if the first result value does not exist in the internal memory or the external memory, can generate a final result value, and generate AI feature information based on the final result value.

Next, the AI terminal 500 of the present disclosure transmits AI feature information to the robot cleaner 610, and when receiving an AI feature information storage completion message from the robot cleaner 610, transmits an AI feature control command to the robot cleaner 610 so that the robot cleaner 610 performs the AI feature, and can receive AI feature performance result information from the robot cleaner 610.

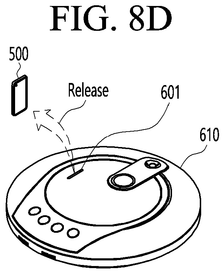

As illustrated in FIG. 8D, the AI terminal 500 of the present disclosure can determine whether to disconnect the communication with the robot cleaner 610 based on the AI feature performance result information.

As an example, the AI terminal 500 of the present disclosure can disconnect the communication with the robot cleaner 610 if the AI feature of the robot cleaner 610 is successfully performed based on the AI feature performance result information.

However, the AI terminal 500 of the present disclosure can maintain a communication connection with the robot cleaner 610 and retransmit AI feature information to the robot cleaner 610 if the AI feature of the robot cleaner 610 fails to be performed, thereby re-performing the AI feature of the robot cleaner 610.

Next, the AI terminal 500 of the present disclosure can re-perform AI processing based on the collected basic information to regenerate AI feature information if the AI feature of the robot cleaner 610 fails again as a result of re-performing the AI feature of the robot cleaner 610, and transmit the re-generated AI feature information to the robot cleaner 610.

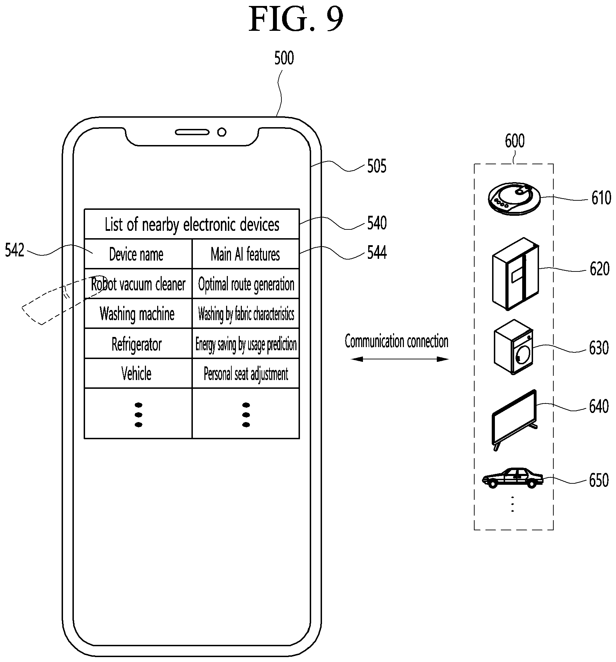

FIG. 9 is a drawing for explaining the process of generating an electronic device list of an AI terminal according to an embodiment of the present disclosure.

As illustrated in FIG. 9, when a user input for selecting an AI feature additional execution app is received, the AI terminal 500 of the present disclosure performs a communication connection to a surrounding electronic device 600, and when a communication connection is established with at least one electronic device 600, identification information is obtained from the electronic device 600 connected to the communication connection, and based on the identification information, the electronic devices 600 capable of wireless communication are grouped and stored, and a list of electronic devices capable of wireless communication 540 is generated and output on the display screen 505.

Here, when the AI terminal 500 of the present disclosure generates a list of electronic devices capable of communication 540, the list of electronic devices capable of communication 542 and the main AI feature item 544 among the AI feature items that can be provided by each electronic device can be output together.

For example, the AI terminal 500 of the present disclosure can extract a main AI feature item 544 based on previously stored AI feature provision history information or AI feature information that can be provided by each preset electronic device, and include it in the electronic device list 540.

For example, if the electronic device item 542 is a robot vacuum cleaner 610, the main AI feature item 544 can be optimal route generation, if the electronic device item 542 is a washing machine 630, the main AI feature item 544 can be laundry by fabric characteristics, if the electronic device item 542 is a refrigerator 620, the main AI feature item 544 can be energy saving by usage prediction, and if the electronic device item 542 is a vehicle 650, the main AI feature item 544 can be individual seat adjustment.

In addition, the AI terminal 500 of the present disclosure can analyze the AI feature provided to a specific electronic device when a user input for selecting a specific electronic device from the electronic device list 540 is received after outputting a list of electronic devices 540 capable of communication on the display screen 505.

In addition, the AI terminal 500 of the present disclosure can generate a notification message notifying of the wireless communication disconnection and a recommendation message recommending a wired communication connection with a desired electronic device when wireless communication is not connected with at least one electronic device 600, and output the notification message and the recommendation message together on the display screen 505.

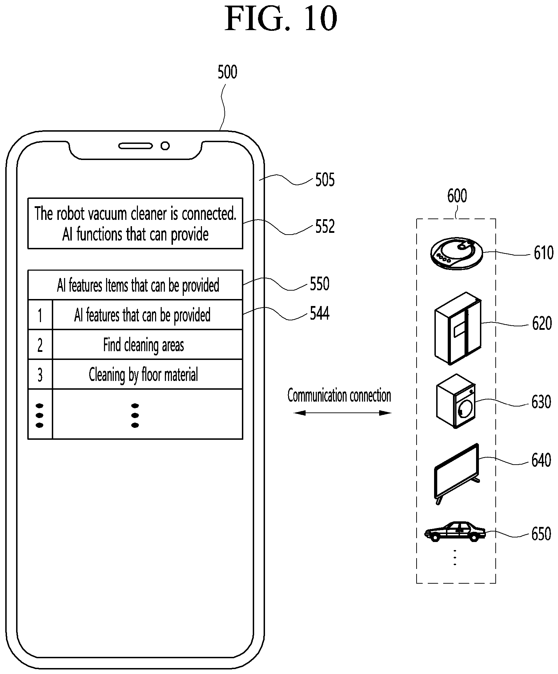

FIG. 10 is a drawing for explaining a process for selecting an AI feature that can be provided by an AI terminal according to an embodiment of the present disclosure.

As illustrated in FIG. 10, the AI terminal 500 of the present disclosure extracts AI feature items of an electronic device corresponding to identification information from a pre-stored AI feature list for each electronic device, and if there is only one extracted AI feature item, the AI feature that can be provided to the electronic device 600 can be selected based on the AI feature item.

In one embodiment, the AI terminal 500 of the present disclosure generates a user selection window 550 including a plurality of AI feature items if there are multiple extracted AI feature items, outputs it on the display screen 505, and if a user input for selecting an AI feature item 544 through the user selection window 550 is received, the AI feature that can be provided to the electronic device 600 can be selected based on the selected AI feature item 544.

For example, the AI terminal 500 of the present disclosure can, when connected to a robot cleaner 610, provide a notification message 552 indicating that the AI terminal is connected to the robot cleaner 610, and can also provide a guide message for selecting an AI feature item to be provided among a plurality of AI feature items.

Here, the plurality of AI feature items corresponding to the robot cleaner 610 can include a firstAI feature item that finds a dirty cleaning area and performs cleaning, a second AI feature item that performs cleaning by distinguishing between floor materials, etc.

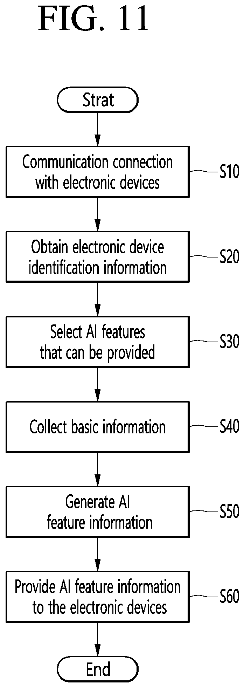

FIG. 11 is a drawing for explaining an AI feature providing method of an AI terminal according to an embodiment of the present disclosure.

As illustrated in FIG. 11, the present disclosure can perform a communication connection with an electronic device (S10).

In addition, the present disclosure can obtain identification information from an electronic device when connected to a communication connection with an electronic device (S20).

As an example, the present disclosure performs a wireless communication connection to a surrounding electronic device when a user input for selecting an AI feature additional execution app is received, and if wireless communication is connected with at least one electronic device, identification information is obtained from the electronic device connected to the wireless communication, and based on the identification information, electronic devices capable of wireless communication are grouped and stored, and a list of electronic devices capable of wireless communication is generated and output on a display screen.

Here, the present disclosure generates a notification message notifying of the wireless communication disconnection and a recommendation message recommending a wired communication connection with a desired electronic device when wireless communication is not connected with at least one electronic device, and outputs the notification message and the recommendation message together on the display screen.

As another example, the present disclosure checks whether there is a wired communication connection with an electronic device through an interface when a user input for selecting an AI feature additional execution app is received, and if there is a wired communication connection with the electronic device, identification information is obtained from the electronic device connected to the wired communication, and based on the identification information, information on the electronic device connected to the wired communication and a communication connection completion message are generated and output on the display screen.

Here, the present disclosure can generate a notification message notifying of the communication disconnection when the wired communication with the electronic device is disconnected for a preset time from the time when the user input for selecting the AI feature additional execution app is received when the presence or absence of the wired communication connection with the electronic device is confirmed, and output the notification message on the display screen.

As another embodiment, the present disclosure can generate a notification message notifying of the communication disconnection when the user input for selecting the AI feature additional execution app is received, perform a communication connection with the electronic device when the connection with the electronic device is confirmed, acquire identification information from the electronic device connected to the communication connection when the communication connection with the electronic device is established, and generate information on the electronic device connected to the communication connection and a communication connection completion message based on the identification information and output them on the display screen.

Here, the present disclosure can include a sensor that senses the connection with the electronic device, and can confirm the connection with the electronic device based on the sensing signal of the sensor.

Next, the present disclosure can select an AI feature that can be provided to the electronic device based on the identification information (S30).

Here, the present disclosure extracts AI feature items of an electronic device corresponding to identification information from a pre-stored AI feature list for each electronic device, and if there is only one extracted AI feature item, an AI feature that can be provided to the electronic device can be selected based on the AI feature item.

In some cases, the present disclosure generates a user selection window including multiple AI feature items and outputs it on a display screen if there are multiple extracted AI feature items, and if a user input for selecting an AI feature item is received through the user selection window, an AI feature that can be provided to the electronic device can be selected based on the selected AI feature item.

In another case, the present disclosure automatically selects the AI feature item that has been provided the most based on previously stored AI feature provision history information if there are multiple extracted AI feature items, and selects an AI feature that can be provided to the electronic device based on the automatically selected AI item.

Next, the present disclosure can collect basic information for generating the selected AI feature (S40).

Here, the present disclosure extracts necessary information items for generating a selected AI feature, divides the extracted necessary information items into first necessary information items that can be acquired by the user and second necessary information items that cannot be acquired by the user, collects first basic information corresponding to the first necessary information item from an internal memory, and collects second basic information corresponding to the second necessary information item from an external memory.

In addition, the present disclosure can collect second basic information from a memory included in an electronic device located nearby when collecting second basic information corresponding to the second necessary information item, and collect second basic information that was not collected in the first collection from a database included in an external server.

Here, the present disclosure can stop collecting second basic information from an external server when all second basic information is collected from the electronic device located nearby.

In addition, the present disclosure can perform AI processing based on the collected basic information to generate AI feature information (S50).

Here, the present disclosure checks whether a first result value for some overlapping AI processing already exists based on previously stored AI feature provision history information, and if a first result value for some overlapping AI processing exists, only the remaining AI processing excluding the overlapping AI processing among the entire AI processing for generating AI feature information is performed to generate a second result value, and AI feature information can be generated based on the first result value and the second result value.

At this time, the present disclosure performs the entire AI processing for generating AI feature information based on the collected basic information if the first result value does not exist, and generates a final result value, and AI feature information can be generated based on the final result value.

In addition, the present disclosure, when checking whether the first result value already exists, checks whether the first result value for some overlapping AI processing exists in the internal memory or the external memory, and if the first result value exists in the internal memory, acquires the first result value from the internal memory, and if the first result value exists in the external memory, acquires the first result value from the external memory of an external electronic device or an external server.

Here, the present disclosure performs the entire AI processing for generating AI feature information based on the collected basic information if the first result value does not exist in the internal memory or external memory to generate the final result value, and generates AI feature information based on the final result value.

Next, the present disclosure can provide AI feature information to the electronic device so that the electronic device can execute the AI feature (S60).

Here, the present disclosure can transmit AI feature information to the electronic device, and when receiving an AI feature information storage completion message from the electronic device, transmit an AI feature control command to the electronic device so that the electronic device can execute the AI feature, and receive AI feature execution result information from the electronic device.

In addition, the present disclosure can determine whether to disconnect the communication connection with the electronic device based on the AI feature execution result information.

As an example, the present disclosure can disconnect the communication connection with the electronic device if the AI feature execution of the electronic device is successful based on the AI feature execution result information, and maintain the communication connection with the electronic device if the AI feature execution of the electronic device is unsuccessful, provide AI feature information to the electronic device, and retransmit the AI feature information to the electronic device so that the AI feature of the electronic device can be re-executed.

Next, the present disclosure can regenerate AI feature information by re-performing AI processing based on collected basic information when the AI feature of the electronic device fails again as a result of re-performing the AI feature of the electronic device, and transmit the re-generated AI feature information to the electronic device.

Meanwhile, the present disclosure can obtain identification information and pre-stored AI feature information from the electronic device when connected to a communication connection with the electronic device, check whether the AI feature information pre-stored in the electronic device is updated based on the identification information, collect update information for AI feature update when it is determined that the AI feature information pre-stored in the electronic device needs to be updated, perform AI processing based on the collected update information to generate updated AI feature information, and provide the updated AI feature information to the electronic device so that the electronic device can execute the updated AI feature.

Here, the present disclosure can collect update information primarily from an internal memory, and if the update information does not exist in the internal memory, collect it secondarily from an external memory.

In addition, the present disclosure can collect update information primarily from a memory included in an electronic device located in the vicinity when collecting secondary information from an external memory, and can also collect update information that was not collected in the primary collection secondary from a database included in an external server.

In this way, the present disclosure can easily and simply add or expand the AI feature of an electronic device by providing AI feature information generated by performing AI processing to the electronic device so that the electronic device can perform the AI feature, thereby reducing unnecessary economic waste.

In addition, the present disclosure can provide the optimal AI feature to the electronic device by generating a customized AI feature for each electronic device, so that user convenience and satisfaction can be greatly improved.

Meanwhile, the method for performing an AI feature of an electronic device that is connected to an AI terminal according to the present disclosure can include: confirming a connection with an AI terminal, establishing a communication connection with the AI terminal when the AI terminal is connected, receiving an identification information request from the AI terminal connected to the communication, providing identification information to the AI terminal, receiving AI feature information from the AI terminal, performing an AI feature based on the AI feature information, and generating AI feature performance result information and transmitting it to the AI terminal.

The electronic device that is connected to an AI terminal according to the present disclosure can include a communication unit that is connected to the AI terminal, a memory that stores AI feature information provided from the AI terminal, and a processor that performs an AI feature based on the AI feature information.

Here, the processor can provide identification information to the AI terminal when receiving an identification information request from the AI terminal connected to the communication, store the AI feature information in the memory when receiving the AI feature control command from the AI terminal, and perform an AI feature based on the AI feature information and generate AI feature performance result information and transmit it to the AI terminal.

As an example, the communication unit can include a wireless communication module that is wirelessly connected to the AI terminal, and the processor can receive AI feature information from the AI terminal connected to the wireless communication.

As another example, the communication unit can include an interface that is wiredly connected to the AI terminal, and the processor can receive AI feature information from the AI terminal connected to the wired communication.

As another example, the electronic device can further include a detachable module that the AI terminal can be detached from, and the processor can perform a communication connection with the AI terminal when the AI terminal is connected to the AI terminal through the detachable module, and can receive AI feature information from the AI terminal connected to the AI terminal when the AI terminal is connected to the AI terminal.

Here, the communication unit can include a BLE (Bluetooth Low Energy) communication module, and the processor can perform a communication connection with the AI terminal through the BLE communication module.

In addition, the detachable module can include a sensor that senses the connection of the AI terminal, and the processor can confirm the connection of the AI terminal based on a sensing signal of the sensor.

For example, the sensor can include a hall sensor, which can sense the magnet of the Al terminal and sense the connection and separation with the AI terminal.

Meanwhile, when the electronic device receives a request for identification information and pre-stored AI feature information from an AI terminal connected to communication, the electronic device provides the identification information and pre-stored AI feature information to the AI terminal, when receiving updated AI feature information from the AI terminal, the electronic device replaces the pre-stored AI feature information with the updated AI feature information, and when receiving an AI feature control command from the AI terminal, the electronic device can perform the updated AI feature based on the updated AI feature information, and generate updated AI feature execution result information and transmit it to the AI terminal.

The above-described disclosure can be implemented as a computer-readable code on a medium in which a program is recorded. The computer-readable medium includes all types of recording devices in which data that can be read by a computer system is stored. Examples of computer-readable media include a hard disk drive (HDD), a solid-state disk (SSD), a silicon disk drive (SDD), a ROM, a RAM, a CD-ROM, a magnetic tape, a floppy disk, an optical data storage device, etc. In addition, the computer can include a processor of an artificial intelligence device.

## Claims

1. An artificial intelligence (AI) terminal comprising:
a communication module connected to an electronic device; and
a processor configured to perform AI processing for providing one or more AI features to the electronic device, wherein the processor is configured to:
obtain identification information from the electronic device,
select at least one AI feature of the one or more AI features based on the identification information,
collect basic information for generating the selected at least one AI feature,
generate AI feature information by performing AI processing based on the collected basic information, and
provide the AI feature information to the electronic device so that the electronic device executes the at least one AI feature.

2. The AI terminal of claim 1, wherein the communication module includes a Bluetooth Low Energy (BLE) communication module, and
wherein the AI terminal is configured to connect to the electronic device through the BLE communication module.

3. The AI terminal of claim 1 or 2, further comprising a sensor configured to sense an attachment connection with the electronic device, and
wherein the processor is configured to check the attachment connection with the electronic device based on a sensing signal of the sensor.

4. The AI terminal of any of the preceding claims, further comprising a memory configured to store an AI feature list for the electronic device, where the AI feature list specifies AI feature items that are preset and capable of being provided for the electronic device, and
wherein selecting the at least one AI feature comprises:
extracting at least one AI feature item of the electronic device corresponding to the identification information from the AI feature list, and
as a result of the at least one extracted AI feature item being a single AI feature item, selecting the at least one AI feature based on the single extracted AI feature item.

5. The AI terminal of any of the preceding claims, wherein collecting the basic information for generating the selected at least one AI feature comprises:
extracting a necessary information item for generating the selected at least one AI feature,
dividing the extracted necessary information item into a first necessary information item and a second necessary information item, wherein the first necessary information item is self-obtainable and the second necessary information item is not self-obtainable,
collecting first basic information corresponding to the first necessary information item from an internal memory, and
collecting second basic information corresponding to the second necessary information item from an external memory.

6. The AI terminal of claim 5, wherein the external memory includes a memory included in a second electronic device located in the vicinity and a database included in an external server.

7. The AI terminal of claim 6, wherein collecting the second basic information comprises:
collecting the second basic information from the memory included in the second electronic device located in the vicinity, and
secondarily collecting the second basic information not collected in the first collection from the database included in the external server.

8. The AI terminal of any of the preceding claims, wherein generating the AI feature information comprises:
determining that a first result value for an overlapping part of the AI processing already exists based on previously stored AI feature provision history information, wherein the AI processing comprises the overlapping part and a remaining part,
after determining that the first result value for the overlapping part of the AI processing exists, generating a second result value by performing only the remaining part of the AI processing, and
generating the AI feature information based on the first result value and the second result value.

9. The AI terminal of any of the preceding claims, wherein the processor is configured to
release the connection with the electronic device after a performance of the one or more AI features by the electronic device is successful based on AI feature performance result information of the electronic device, or
maintain the connection with the electronic device and re-perform the one or more AI features of the electronic device by retransmitting the AI feature information to the electronic device as a result of a performance of the one or more AI features of the electronic device being unsuccessful based on the AI feature performance result information of the electronic device.

10. An electronic device comprising:
a communication module connected to an artificial intelligence (AI) terminal;
a memory configured to store AI feature information provided from the AI terminal; and
a processor configured to perform an AI feature based on the AI feature information,
wherein the processor is configured to:
after receiving a request for identification information from the connected AI terminal, provide the identification information to the AI terminal,
after receiving the AI feature information from the AI terminal, store the AI feature information in the memory,
after receiving an AI feature control command from the AI terminal, perform the AI feature based on the AI feature information, and
generate and transmit AI feature performance result information to the AI terminal.

11. The electronic device of claim 10, wherein the communication module includes a wireless communication module that is wirelessly connected to the AI terminal, and
wherein the processor is configured to receive the AI feature information from the wirelessly connected AI terminal.

12. The electronic device of claim 10 or 11, wherein the communication module includes an interface that is wiredly connected to the AI terminal, and
wherein the processor is configured to receive the AI feature information from the wiredly connected AI terminal.

13. The electronic device of any of claims 10 to 12, further comprising a detachable module, wherein the AI terminal is detachable, and
wherein the processor is configured to:
as a result of the AI terminal being attached through the detachable module, connect with the AI terminal, and
after the AI terminal is connected, receive the AI feature information from the connected AI terminal.
